Europäisches Patentamt

(19) European Patent Office

Office européen des brevets

(11) Veröffentlichungsnummer: **0 166 178 B1**

(12) **EUROPÄISCHE PATENTSCHRIFT**

(45) Veröffentlichungstag der Patentschrift: 08.08.90

(21) Anmeldenummer: 85106084.8

(22) Anmeldetag: 17.05.85

(51) Int. Cl.⁵: **B 60 T 7/12**, B 60 T 8/66, B 60 K 26/02, F 02 D 41/00

(54) Antriebsschlupfregelsystem.

(30) Priorität: 26.05.84 DE 3419716

(43) Veröffentlichungstag der Anmeldung:
02.01.86 Patentblatt 86/01

(45) Bekanntmachung des Hinweises auf die
Patenterteilung:
08.08.90 Patentblatt 90/32

(84) Benannte Vertragsstaaten:
DE FR GB IT SE

(56) Entgegenhaltungen:
FR-A-2 509 242
FR-A-2 534 198

(73) Patentinhaber: ROBERT BOSCH GMBH
Postfach 50
D-7000 Stuttgart 1 (DE)

(72) Erfinder: Leiber, Heinz, Ing.-grad.
Theodor-Heuss-Strasse 34
D-7141 Oberriexingen (DE)
Erfinder: Korasiak, Wolfgang, Ing.-grad.
Brombergerstrasse 20
D-7120 Bietigheim (DE)
Erfinder: Jonner, Wolf-Dieter, Ing.-grad.
Burgunderstrasse 25
D-7141 Beilstein (DE)

(74) Vertreter: Kammer, Arno, Dipl.-Ing.
ROBERT BOSCH GmbH Zentralabteilung
Patente Postfach 50
D-7000 Stuttgart 1 (DE)

EP 0 166 178 B1

## Beschreibung

Die Erfindung betrifft ein Antriebsschlupfregelsystem für ein Straßenfahrzeug mit den Merkmalen des Oberbegriffs des Anspruchs 1.

Derartige Antriebsschlupfregelsysteme sind z.B. aus der DE—A—31 27 302 bekannt.

Die Erfindung will die bekannten Antriebsschlupfregelsysteme dahingehend verbessern, daß bei niedriger Fahrzeuggeschwindigkeit eine gute Tranktion und bei höherer Geschwindigkeit eine optimale Fahrzeugstabilität erzielt wird.

Anhand der Zeichnung wird ein Ausführungsbeispiel der Erfindung erläutert.

Es zeigen

Fig. 1 ein Blockschaltbild eines erfindungsgemäß konzipierten Antriebsschlupfregelsystems

Fig. 2 ein Diagramm, das einen möglichen Verlauf der Ansprechschwellen und der Sollwertbereiche über der Zeit zeigt.

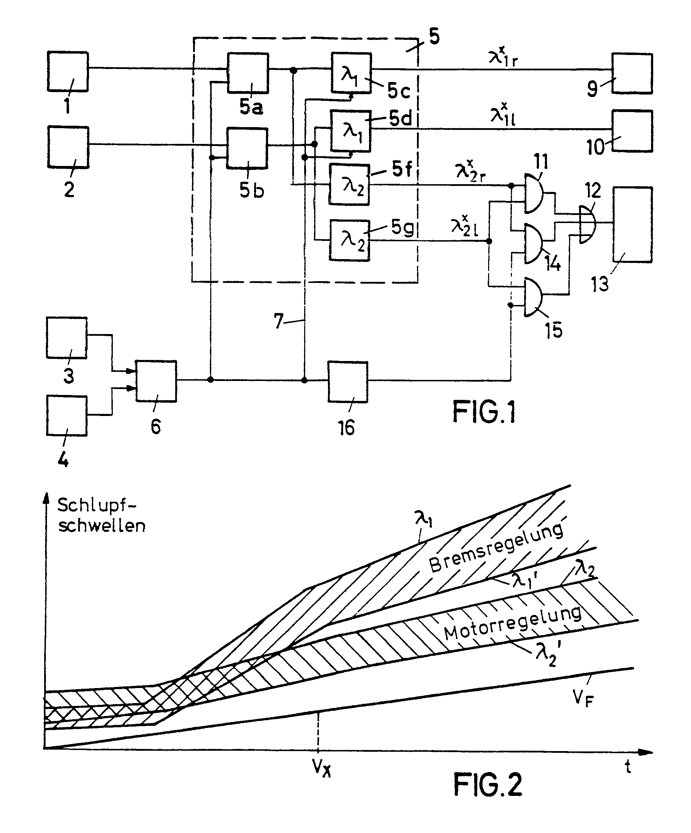

In Fig. 1 sind den beiden angetriebenen Rädern zugeordnete Meßwertgeber mit 1 und 2 und den nicht angetriebenen Rädern zugeordnete Meßwertgeber mit 3 und 4 bezeichnet. Die den Radgeschwindigkeiten $V_{R1}$ bzw. $V_{R2}$ der beiden angetriebenen Räder entsprechenden Signale werden einer Auswerteschaltung 5 zugeführt, der auch ein in einem Block 6 gemitteltes Radgeschwindigkeitssignal der nicht angetriebenen Räder zugeführt wird. Im Block 5 werden die Signale der Meßwertgeber 1 und 2 in Vergleichern 5a und 5b mit dem gemittelten Signal des Blocks 6, das im nicht gebremsten Zustand der Fahrzeuggeschwindigkeit $V_F$ entspricht, verglichen und in Schwellwertstufen 5c bis 5g werden Schlupfsignale $\lambda_{1r}$ und $\lambda_{2r}$ für das rechte Rad und $\lambda_{1l}$ und $\lambda_{2l}$ für das linke Rad erzeugt. Der Schlupf ist definiert als:

$$\lambda = \frac{V_R - V_F}{V_F}$$

Die Schlupfsignale $\lambda_{1r}$ und $\lambda_{1l}$ werden Steuergliedern 9 und 10 zugeführt, über die Bremsdruck in der zugehörigen Radbremse eingesteuert und dort variiert werden kann. Z.B. kann über ein Zweistellungsventil in der Bremse Druck eingesteuert oder abgebaut werden. Mit einem Dreistellungsventil ist eine zusätzliche Druckhaltefunktion realisierbar. Im Block 5 werden mittels der Schwellwertstufen 5f und 5g Schlupfsignal $\lambda_{2r}$ und $\lambda_{2l}$ erzeugt, die über ein Und-Gatter 11 und ein Oder-Gatter 12 ein Steuerglied 13 zur Steuerung des Motordrehmoments beeinflussen. Das Und-Gatter 11 wird ab einer in einem Vergleichsglied 16 vorgegebenen Radgeschwindigkeit $V_x$ durch Und-Gatter 14 und 15 überbrückt. Die Schwellwertstufen 5c und 5d sind in Abhängigkeit von der Geschwindigkeit steuerbar.

Fig. 2 zeigt den Regelverlauf. Mit $V_F$ ist der Fahrzeuggeschwindigkeitsverlauf bezeichnet, mit $\lambda_1$ und $\lambda_2$ der Verlauf der Schlupfschwellen, bei denen die Schwellwertstufen ansprechen. Die Schlupfschwellen $\lambda_1'$ und $\lambda_2'$ werden nach Überschreiten der Schlupfschwellen $\lambda_1$ und $\lambda_2$ wirksam une bestimmen das Rückschalten des Ventils auf Druckabbau bzw. das Erhöhen des Motordrehmoments.

Man erkennt aus Fig. 2, daß der Schwellwert $\lambda_1$ bei niedriger Geschwindigkeit unterhalb des $\lambda_2$-Schwellwerts liegt. Hieraus folgt, daß bei niedriger Geschwindigkeit bei einer Durchdrehneigung (Erreichen von $\lambda_1$ an einem oder beiden Rädern) Bremsdruck aufgebaut wird, bevor bei höherem Schlupf ($\lambda_2$) und Durchdrehneigung an beiden Rädern das Motordrehmoment beeinflußt wird. Dies ergibt eine optimale Traktion.

Bei höherer Geschwindigkeit liegt $\lambda_1$ dagegen weit oberhalb $\lambda_2$, sodaß hier une weil ab $V_x$ schon nur ein Durchdrehneigung zeigendes Rad die Motorregelung in Gang setzen kann, die Motormomentenregelung vorherrscht. Das Anheben der Schwellen $\lambda_1$ und $\lambda_1'$ in Abhängigkeit von der Geschwindigkeit wird über die Leitung 7 in den Schwellwertstufen 5c und 5d erzielt. Diese Schwellwertstufen könnten z.B. je einen Spannungsteiler mit veränderlichem Widerstand oder ein sonstiges Glied zur Beeinflussung der Größe des Schwellwerts oder des $\lambda$-Signals sein. Durch die Schwellen $\lambda_1$ und $\lambda_1'$ und $\lambda_2$ und $\lambda_2'$ werden die Räder jeweils im wesentlichen in den schraffierten Bereichen gehalten. Zwischen den beschriebenen $\lambda$-Bereichen bei relativ hoher und niedriger Geschwindigkeit liegt ein Übergangsbereich, in dem die Schwellen $\lambda_1$ und $\lambda_1$ kontinuierlich ansteigen und die $\lambda_2$, $\lambda_2'$-Schwellen schneiden.

## Patentansprüche

1. Antriebsschlupfregelsystem, bei dem bei Auftreten eines positiven Radschlupfs bestimmter Größe an wenigstens einem der angetriebenen Räder dieses Rad derart gebremst wird, daß es in einem Schlupfbereich vorgegebener Größe verbleibt und bei dem bei Auftreten eines positiven Radschlupfs bestimmter Größe an beiden angetriebenen Rädern zusätzlich das Motormoment derart variiert wird, daß die Räder in einem Schlupfbereich vorgegebener Größe verbleiben, dadurch gekenzeichnet, daß die Größe des Radschlupfs für den Einsatz der Bremsregelung (1. Ansprechschwelle) mit steigender Geschwindigkeit über die Größe des Radschlupfs für den Einsatz der Motormomentenregelung (2. Ansprechschwelle) angehoben wird.

2. Antriebsschlupfregelsystem nach Anspruch 1, dadurch gekennzeichnet, daß die 1. Ansprechswelle bei kleiner Geschwindigkeit unterhalb der zweiten Ansprechswelle liegt.

3. Antriebsschlupfregelsystem nach Anspruch 1, dadurch gekennzeichnet, daß die beiden Ansprechschwellen bei niedriger Geschwindigkeit etwa gleich groß sind.

4. Antriebsschlupfregelsystem nach einem Ansprüche 1 bis 3, dadurch gekennzeichnet, daß die Anhebung kontinuierlich erfolgt.

5. Antriebsschlupfregelsystem nach einem der Ansprüche 1 bis 4, dadurch gekennzeichnet, daß ab einer vorgegebenen Geschwindigkeit $V_x$ die Motormomentenregelung bereits durch Durchdrehneigung an einem Rad ausgelöst wird.

6. Antriebsschlupfsystem nach einem der Ansprüche 1 bis 5, dadurch gekennzeichnet, daß bei Überschreiten der Ansprechschwellen $\lambda_1$ bzw. $\lambda_2$, diese auf einen kleineren Schwellwert $\lambda_1$ bzw. $\lambda_2$ umgeschaltet werden und daß die Bremskraft auslösende bzw. Motormoment reduzierende Wirkung aufrecht erhalten bleibt, bis diese umgeschalteten Schwellwerte wieder unterschritten werden.

## Revendications

1. Système de régulation du patinage d'entraînement pour lequel en présence d'un patinage positif de roue, d'une certaine amplitude sur au moins l'une des roues motrices on freine cette roue pour qu'elle reste dans une zone prédéterminée de la plage de patinage et en présence d'un patinage positif de roue d'une amplitude déterminée pour les deux roues motrices on modifie le couple moteur de façon que les roues restent dans une plage de patinage d'amplitude prédéterminée, système caractérisé en ce qu'on augmente l'amplitude du patinage de roue pour la mise en oeuvre de la régulation de freinage (premier seuil de mise en oeuvre) à mesure que la vitesse augmente, au-delà de l'amplitude du patinage de roue correspondant à la mise en oeuvre de la régulation du couple moteur (deuxième seuil de mise en oeuvre).

2. Système de régulation de patinage d'entraînement selon la revendication 1, caractérisé en ce qu'aux faibles vitesses le premier seuil de mise en oeuvre se situe en-dessous du second seuil de mise en oeuvre.

3. Système de régulation du patinage d'entraînement selon la revendication 1, caractérisé en ce qu'aux faibles vitesses les deux seuils de mise en oeuvre sont sensiblement identiques.

4. Système de régulation du patinage d'entraînement selon l'une des revendications 1 à 3, caractérisé en ce que l'augmentation se fait en continu.

5. Système de régulation du patinage d'entraînement selon l'une des revendications 1 à 4, caractérisé en ce qu'à partir d'une vitesse prédéterminée ($V_x$), la régulation du couple moteur est déclenchée dés qu'une roue tend à tourner en sur-vitesse.

6. Système de régulation du patinage d'entraînement selon l'une des revendications 1 à 5, caractérisé en ce qu'au dépassement des seuils de sollicitation ($\lambda_1$) et ($\lambda_2$) on commute ceux-ci à des valeurs de seuil plus faibles ($\lambda_1'$) et ($\lambda_2'$) et on maintient l'action qui a déclenché la force de freinage ou la réduction du couple moteur jusqu'à ce que l'on soit de nouveau passé en-dessous de ces seuils commutés.

## Claims

1. Drive slip control system with which, on the occurrence of a positive wheel slip of a certain magnitude at least one of the driven wheels, this wheel is braked in such a way that it remains in a slip region of a given size and in which, upon occurrence of a positive wheel slip of a certain magnitude at both driven wheels, in addition the engine torque is varied in such a way that the wheels remain in a slip region of a given size, characterized in that the magnitude of the wheel slip for the onset of the brake control (1st response threshold) is raised with increasing speed beyond the magnitude of the wheel slip for the onset of the engine torque control (2nd response threshold).

2. Drive slip control system according to Claim 1, characterized in that, at low speed, the 1st response threshold lies below the second response threshold.

3. Drive slip control system according to Claim 1, characterized in that, at low speed, the two response thresholds are approximately equal in magnitude.

4. Drive slip control system according to one of Claims 1 to 3, characterized in that the raising is carried out continuously.

5. Drive slip control system according to one of Claims 1 to 4, characterized in that, from a given speed $V_x$, the engine torque control is initiated already by the tendency to spin at a wheel.

6. Drive slip system (sic) according to one of Claims 1 to 5, characterized in that, on exceeding the threshold values $\lambda_1$ and $\lambda_2$, the latter are switched over to a smaller threshold value $\lambda_1$, and $\lambda_2$, respectively, and in that the effect initiating braking force and reducing engine torque is maintained until these switched-over threshold values are again crossed in the downward sense.

FIG.1

FIG.2